# DEMANDE DE BREVET EUROPEEN

(11) **EP 1 514 735 A1**
(43) Date de publication de la demande: **16.03.2005**
(21) Numéro de dépôt: 03020744.3
(22) Date de dépôt: 12.09.2003
(51) Int. Cl.: B60R 11/04, F16M 11/20, F16M 11/42, F16F 9/04, G03B 37/02

(54) **Travelling et procédé de filmage**

(71) Demandeur: Wodon, Eric, 1490 Court-Saint-Etienne (BE)
(72) Inventeur: Wodon, Eric, 1490 Court-Saint-Etienne (BE)

(57) **Abrégé**

Travelling comprenant un appareil de prises de vues (7) sur un aéroglisseur (1) et procédé de filmage mettant en oeuvre un tel travelling.

## Description

### Domaine de l'invention

L'invention se rapporte aux prises de vues, particulièrement aux prises de vues cinématographiques et de télévision.

L'invention concerne plus particulièrement un travelling destiné aux prises de vues cinématographiques et/ou de télévision.

### Etat de la technique

Les prises de vues cinématographiques et de télévision font fréquemment appel à la technique du travelling. Dans cette technique, un appareil de prises de vues (une caméra de cinéma ou de télévision) est monté sur un véhicule que l'on déplace vis-à-vis d'une scène à filmer. Le déplacement du véhicule doit être opéré dans des conditions strictes, évitant les mouvements incontrôlés tels que des vibrations ou des chocs. Il existe des circonstances dans lesquelles ces conditions sont difficiles à réaliser, notamment lors des prises de vues sur des terrains accidentés, dans des ruelles pavées ou sur des plans d'eau. Pour réaliser des prises de vues en travelling dans de telles conditions, on réalise habituellement un chemin de roulement adéquat sur lequel on fait rouler le véhicule portant l'appareil de prises de vues. Ces chemins de roulement consistent habituellement en une paire de rails (du type de ceux utilisés dans les chemins de fer) posées sur le sol. Un exemple de travelling connu est décrit dans le document WO 01/92952. Les chemins de roulement de ces travellings connus sont coûteux. Leur construction prend du temps et retarde d'autant le programme de prises de vues. Ces inconvénients se répercutent sur le coût de la réalisation des prises de vues et du tournage des films cinématographiques. Ils sont particulièrement importants lorsque les films à réaliser comprennent un grand nombre de scènes différentes, dans des lieux différents ou sur des terrains accidentés. Les prises de vues en travelling sur des plans d'eau sont difficiles et elles sont souvent impossible en mer. Un autre désavantage des travellings connus est le manque de souplesse dans les prises de vues, du fait que le véhicule du travelling est assujetti à son chemin de roulement et ne peut pas s'en écarter.

### Résumé de l'invention

L'invention vise à fournir un travelling de conception nouvelle, qui évite les inconvénients cités plus haut des travellings connus et qui permet des prises de vues sur des terrains accidentés, sur des plans d'eau et en mer, avec une grande souplesse de mouvement et sans nécessiter la mise en place de chemins de roulement.

En conséquence, l'invention concerne un travelling comprenant un appareil de prises de vues sur un véhicule, le travelling se caractérisant en ce que le véhicule comprend un aéroglisseur.

Dans le travelling selon l'invention, l'appareil de prises de vues n'est pas critique. Il peut être invariablement un appareil photographique, une caméra pour les prises de vues cinématographiques ou une caméra de télévision. L'appareil de prises de vues peut être du type à support photosensible ou du type numérique.

Le véhicule sert à déplacer l'appareil de prises de vues. Selon l'invention, il comprend un aéroglisseur.

Les aéroglisseurs sont bien connus en technique (« Les véhicules à coussins d'air », Conférence prononcée par Jean Bertin le 23 janvier 1963 - http://aernav.free.fr/Coussin/Vehicules_CA.html; « L'aéroglisseur, Qu'est-ce que c'est ? » - http://perso.wanadoo.fr/leslandes/aero/histo/histo%201.ht m) .

De manière générale, un aéroglisseur (ou véhicule à coussin d'air) comprend une plate-forme sous laquelle on insuffle un courant d'air pour la soulever. Il existe diverses conceptions d'aéroglisseurs. Une première conception comprend les aéroglisseurs à chambre de sustentation pleine. Dans cette conception d'aéroglisseur, la plate-forme surmonte une coque ou cloche retournée, sous laquelle on insuffle le courant d'air. L'air insufflé sous la cloche s'échappe à la périphérie de celle-ci et un coussin ou matelas d'air de sustentation est ainsi formé sous la cloche.
Une autre conception d'aéroglisseur comprend les aéroglisseurs dans lesquels la chambre de sustentation comprend une fente périphérique. Selon cette conception, la plate-forme comprend une fente périphérique orientée vers la bas. L'air est insufflé dans cette fente de manière à former un voile périphérique de fluide dynamique qui contribue à maintenir un coussin ou matelas d'air de sustentation sous la plate-forme.
Dans le travelling selon l'invention, l'aéroglisseur peut être un aéroglisseur du type à chambre de sustentation pleine, un aéroglisseur du type à chambre de sustentation à fente périphérique ou tout autre type connu d'aéroglisseur.

Dans le travelling selon l'invention, tout moyen approprié peut être mis en oeuvre pour insuffler l'air de sustentation de l'aéroglisseur. Il peut comprendre un ventilateur couplé à un moteur, selon la conception habituelle des aéroglisseurs. Le moteur peut être un moteur électrique ou un moteur à combustion interne.

Dans une première forme de réalisation particulière du travelling selon l'invention, le ventilateur et son moteur sont montés sur l'aéroglisseur, comme c'est habituellement le cas pour les aéroglisseurs connus. Dans cette forme de réalisation du travelling selon l'invention, le moteur du ventilateur est de préférence un moteur électrique pour réduire le bruit de l'aéroglisseur.

Dans une autre forme de réalisation du travelling selon l'invention, le ventilateur et son moteur sont localisés en dehors de l'aéroglisseur et le ventilateur est relié à la chambre de sustentation de l'aéroglisseur au moyen d'un tuyau approprié. Dans cette forme de réalisation du travelling selon l'invention, le tuyau doit être suffisamment flexible pour ne pas entraver le déplacement de l'aéroglisseur. Cette forme de réalisation de l'invention permet d'écarter le ventilateur et son moteur, des zones de prises de vues, ce qui permet d'éviter que les prises de vues soient perturbées par le bruit du ventilateur et de son moteur.

Dans une variante avantageuse de la forme de réalisation qui vient d'être décrite, on utilise avantageusement un ventilateur portable, celui-ci pouvant ainsi être transporté par un opérateur ou un assistant qui suit à distance le travelling.

Dans une forme de réalisation supplémentaire du travelling selon l'invention, l'air nécessaire à la sustentation est fourni par une bonbonne d'air sous pression, embarquée sur l'aéroglisseur. Cette forme de réalisation de l'invention présente l'avantage de générer peu de bruit.

Dans le travelling selon l'invention, l'aéroglisseur peut comprendre un seul coussin d'air ou, en variante, au moins deux coussins d'air. En pratique, le nombre optimum de coussins d'air va dépendre des dimensions du travelling et du poids de l'appareil de prises de vues, du matériel additionnel qu'il doit supporter et, le cas échéant, du nombre d'opérateurs qu'il doit supporter. Dans la majorité des cas, un seul coussin d'air suffit.

La forme et les dimensions de l'aéroglisseur doivent être adaptées pour supporter l'appareil de prises de vues et, éventuellement, un ou plusieurs opérateurs. Elles doivent dès lors être adaptées dans chaque cas particulier, au moyen d'un travail de routine au bureau d'études.

De manière typique, l'aéroglisseur comprend une plate-forme sur laquelle est monté l'appareil de prises de vues. La plate-forme est conçue en fonction des circonstances et elle peut être plane ou non. Elle peut être circulaire, ovale ou polygonale, par exemple carrée, rectangulaire, hexagonale ou octogonale.

La fixation de l'appareil de prises de vues sur l'aéroglisseur peut être réalisée par tout moyen adéquat, communément utilisé sur les travellings.

Dans une forme de réalisation particulière du travelling selon l'invention, l'appareil de prises de vues (par exemple une caméra) est articulé sur une flèche reliée à l'aéroglisseur au moyen d'une articulation. Dans un mode de réalisation avantageux de cette forme de réalisation de l'invention, la flèche est par exemple articulée à l'extrémité supérieure d'un mât vertical fixé à une plate-forme sensiblement horizontale de l'aéroglisseur, de manière à pouvoir pivoter en azimut et en élévation. L'appareil de prises de vues est fixé à une extrémité de la flèche et est également orientable en azimut et en élévation. Lors de l'exploitation de cette forme de réalisation de l'invention, un opérateur manoeuvre le bras en fonction des directives d'un cadreur (le cameraman en langage anglo-saxon). Dans cette forme de réalisation du travelling selon l'invention, la plate-forme de l'aéroglisseur peut être agencée pour supporter l'opérateur et lui permettre de manoeuvrer la flèche. Cette variante de l'invention est spécialement bien adaptée aux prises de vues sur des terrains accidentés, des plans d'eau ou en mer. Le cadreur peut se trouver sur la plate-forme. En général, il se trouve hors de l'aéroglisseur, par exemple dans un studio d'où il manoeuvre l'appareil de prises de vues au moyen d'une liaison radioélectrique. Dans une autre variante du travelling selon l'invention, la flèche est agencée de manière à la rendre manoeuvrable par un opérateur situé en dehors de la plate-forme de l'aéroglisseur. Cette variante de l'invention convient lorsque les prises de vues sont réalisées sur des terrains peu accidentés (par exemple en rue, sur une place publique, sur une plage, en studio).

Le déplacement de l'aéroglisseur peut être réalisé par tout moyen adéquat.

A cet effet, dans une forme de réalisation particulière du travelling selon l'invention, l'aéroglisseur est muni d'au moins une poignée servant à le mouvoir au-dessus d'une surface. Dans cette forme de réalisation de l'invention, la poignée est destinée à être saisie par une personne se trouvant sur ladite surface pour mouvoir l'aéroglisseur au-dessus de celle-ci en fonction des instructions reçues du cadreur. Le déplacement de l'aéroglisseur peut être réalisé par poussée, traction ou rotation. En variante, l'aéroglisseur comprend plusieurs poignées, pour faciliter son déplacement par plusieurs personnes.

Dans une autre forme de réalisation du travelling selon l'invention, l'aéroglisseur est équipé d'un ventilateur destiné à assurer sa propulsion. Ce ventilateur est avantageusement orientable en azimut.

Dans une forme de réalisation avantageuse du travelling selon l'invention, l'aéroglisseur comprend un volant de stabilisation. Dans cette forme de réalisation de l'invention, le volant a pour fonction de stabiliser l'assiette de l'aéroglisseur. Le choix du volant, en particulier son diamètre et sa masse, ainsi que sa vitesse de rotation vont dépendre de divers paramètres, en particulier des dimensions de l'aéroglisseur et des appareils et personnes qu'il embarque. Ses caractéristiques doivent être déterminées dans chaque cas particulier.
Dans la forme de réalisation qui vient d'être décrite du travelling selon l'invention, le volant peut être couplé à un moteur autonome. On préfère, selon une variante avantageuse, relier le volant au moteur servant à entraîner le ventilateur de sustentation de l'aéroglisseur. Dans cette variante de l'invention, la connexion mécanique du volant au moteur comprend de préférence un organe d'accouplement escamotable, pour permettre de couper et de restaurer à volonté la connexion du volant au moteur.

Le travelling selon l'invention présente la particularité de ne plus nécessiter la mise en place d'un chemin adéquat avant son utilisation. Il présente ainsi comme avantages, une grande facilité d'utilisation, une grande maniabilité et une grande souplesse d'utilisation.

Le travelling selon l'invention peut être utilisé sur tout type de terrains, ainsi que sur l'eau. Il peut notamment être utilisé en ville, dans des rues ou sur des places pavées, dans des squares, sur des pelouses, ainsi que sur des sols accidentés tels que des prairies, des champs de culture et des collines, des glaciers. L'absence de chemin de roulement le rend spécialement bien adapté à une utilisation en studio, à l'intérieur de bâtiments (par exemple des habitations ou des demeures historiques) ou à l'intérieur de véhicules (par exemple à l'intérieur d'avions, de trains ou de bateaux). Le travelling selon l'invention est spécialement bien adapté à une utilisation sur des plans d'eau, notamment des lacs, des rivières, des fleuves et en mer.

Le travelling selon l'invention trouve une application pour les prises de vues photographiques fixes. Le travelling selon l'invention est bien adapté aux prises de vues animées, spécialement aux prises de vues cinématographiques et aux prises de vues télévisées.

L'invention concerne dès lors également un procédé de filmage par travelling, dans lequel on met en oeuvre un travelling comprenant, conformément à l'invention, un appareil de prises de vues sur un aéroglisseur. Dans le procédé selon l'invention, l'appareil de prises de vues est invariablement une caméra de cinéma ou une caméra de télévision.

Dans une forme de réalisation particulière du procédé selon l'invention, on met en oeuvre un aéroglisseur muni d'au moins une poignée et on déplace l'aéroglisseur au moyen de ladite poignée.

### Brève description des figures

Des particularités et détails de l'invention vont apparaître au cours de la description suivante des figures annexées, qui représentent une forme de réalisation particulière du travelling selon l'invention.
La figure 1 est une vue schématique en perspective d'une forme de réalisation du travelling selon l'invention ;
La figure 2 montre à plus grande échelle, en section transversale verticale, un détail du travelling de la figure 1.

Les figures ne sont pas dessinées à l'échelle.

Généralement, les mêmes numéros de référence désignent les mêmes éléments.

### Description détaillée de modes de réalisation particuliers

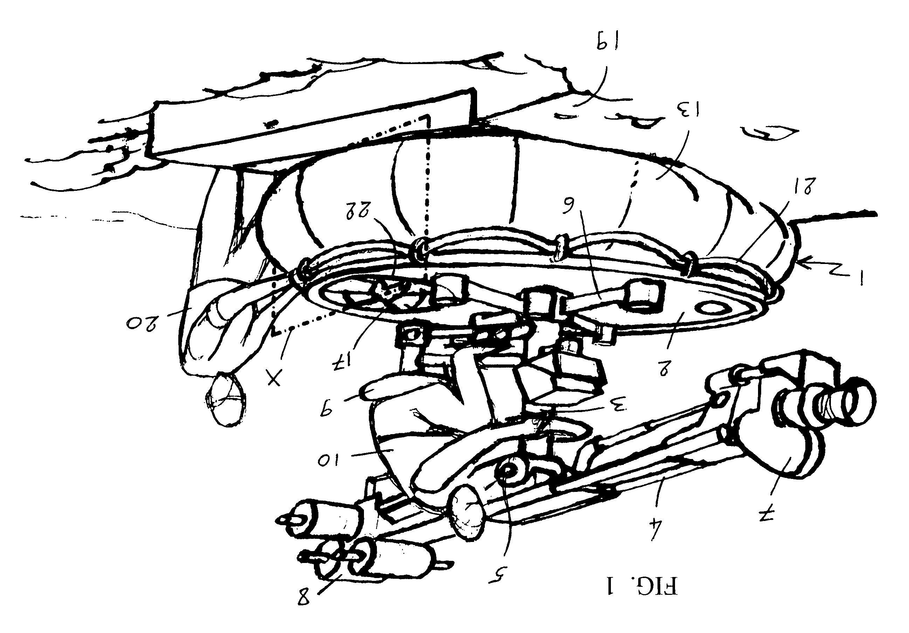

Le travelling représenté à la figure 1 est spécialement adapté aux prises de vues cinématographiques ou de télévision. Il comprend un véhicule 1 portant une plate-forme 2. Un mât 3 est fixé verticalement à la plate-forme 2 au moyen d'un support à quatre pieds 6. A son extrémité supérieure, le mât 3 porte une flèche 4. La flèche 4 est fixée au mât 3 par l'intermédiaire d'une articulation 5 appropriée pour lui permettre de pivoter en azimut et en élévation.

Une caméra 7 est fixée à une extrémité de la flèche 4. A son extrémité opposée, la flèche 4 est pourvue d'un contrepoids 8 servant à équilibrer le poids de la caméra 7. La caméra 7 est fixée à la flèche 4 par l'intermédiaire d'une articulation (non représentée), conçue pour permettre de l'orienter en azimut et en élévation. Cette articulation est couplée à un moteur (non représenté), qui peut être manoeuvré à distance par un cadreur (ou cameraman) situé dans un studio, au moyen d'une liaison radioélectrique.

La plate-forme 2 porte en outre un siège orientable 9 pour un opérateur schématisé en 10. L'opérateur 10 a pour mission de manoeuvrer la flèche pour l'orienter en azimut et en élévation en fonction d'instruction du cadreur.

Conformément à l'invention, le véhicule 1 est un véhicule à coussin d'air ou aéroglisseur.

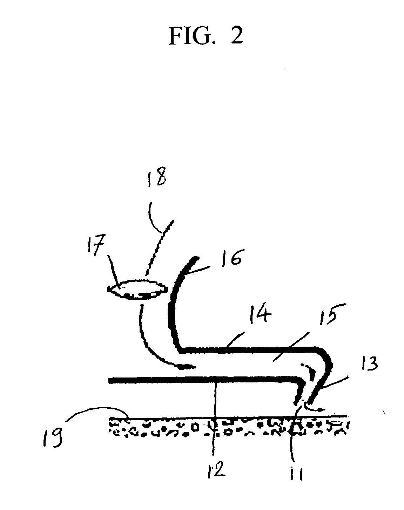

La figure 2 montre, à plus grande échelle, un détail constructif de l'aéroglisseur 1, désigné par la notation de référence X à la figure 1.

Conformément à la figure 2, l'aéroglisseur 1 est du type à fente périphérique 11. Celle-ci est délimitée entre une plaque 12 sensiblement horizontale formant la base du véhicule 1 (ou une partie de celle-ci) et une jupe périphérique 13. La jupe périphérique 13 est prolongée par une plaque annulaire horizontale 14 qui délimite une chambre annulaire 15 en communication avec la fente 11. Une conduite 16 profilée de manière adéquate (par exemple en venturi) débouche au centre de la chambre annulaire 15. Elle contient un ventilateur 17, destiné à puiser de l'air ambiant et à le refouler sous pression, dans le sens de la flèche 18, dans la chambre 15. Le passage de l'air à travers la fente 11 assure la sustentation de l'aéroglisseur au-dessus du sol 19.

Le travelling représenté à la figure 1 peut comprendre un seul coussin d'air, réparti sensiblement sur la totalité de sa surface. En variante, il peut comprendre plusieurs coussins d'air répartis de manière sensiblement uniforme au-dessous de sa plate-forme 2.

Sous la plate-forme 2, le véhicule 1 comprend avantageusement un volant de stabilisation, non représenté. Le volant a pour fonction de stabiliser la position du véhicule 1 au-dessus du sol 19, pendant qu'on le manoeuvre. L'entraînement du volant est réalisé au moyen du moteur (non représenté) du ventilateur 17, auquel il est relié par un organe d'accouplement approprié. Ledit organe d'accouplement comprend un embrayage destiné à ouvrir la liaison du moteur au volant, lorsque ce dernier a atteint sa vitesse de régime.

Pour utiliser le travelling représenté aux figures, on démarre le ventilateur 17 de manière à soulever le véhicule 1 et le matériel qu'il supporte (ainsi que, le cas échéant, l'opérateur 10) et assurer sa sustentation au-dessus du sol. Sous la conduite des instructions reçues du cadreur, un ou plusieurs assistants (tel que celui représenté en 20), déplace le véhicule 1 au-dessus du sol 19. Pour faciliter la tâche de l'assistant 20, le véhicule est équipé de poignées 21 à la périphérie de la plate-forme 2.

Dans le travelling représenté aux figures 1 et 2, le ventilateur 17 et son moteur sont montés sur l'aéroglisseur 1 et transportés avec lui.

Dans une forme de réalisation modifiée, non représentée, le ventilateur 17 et son moteur sont situés en dehors de l'aéroglisseur 1 et un tuyau flexible relie le ventilateur à la prise d'air circulaire 22 de l'aéroglisseur 1. Dans cette forme de réalisation de l'invention, le ventilateur est un ventilateur électrique léger, qui est par exemple porté par l'assistant 20 pendant qu'il manoeuvre l'aéroglisseur.

## Revendications

1. Travelling comprenant un appareil de prises de vues sur un véhicule, **caractérisé en ce que** le véhicule (1) comprend un aéroglisseur.

2. Travelling selon la revendication 1, **caractérisé en ce que** l'aéroglisseur (1) est sélectionné parmi les aéroglisseurs à chambre de sustentation pleine et les aéroglisseurs à chambre de sustentation (15) à fente périphérique (11).

3. Travelling selon la revendication 1 ou 2, **caractérisé en ce qu'**un moyen pour insuffler de l'air dans une chambre de sustentation (15) de l'aéroglisseur comprend un tuyau qui relie ladite chambre de sustentation à un ventilateur localisé en dehors de l'aéroglisseur.

4. Travelling selon la revendication 3, **caractérisé en ce que** le ventilateur est un ventilateur électrique portable.

5. Travelling selon l'une quelconque des revendications 1 à 4, **caractérisé en ce que** l'aéroglisseur (1) est muni d'au moins une poignée (21) pour le mouvoir au-dessus d'une surface (19).

6. Travelling selon l'une quelconque des revendications 1 à 5, **caractérisé en ce que** l'aéroglisseur (1) comprend un volant de stabilisation.

7. Travelling selon la revendication 6, **caractérisé en ce qu'**un organe d'accouplement escamotable relie le volant à un moteur couplé à un ventilateur (17) de sustentation de l'aéroglisseur (1).

8. Travelling selon l'une quelconque des revendications 1 à 7, **caractérisé en ce que** l'appareil de prises de vues (7) est articulé sur une flèche (4) reliée à l'aéroglisseur (1) au moyen d'une articulation (5).

9. Procédé de filmage par travelling, **caractérisé en ce qu'**on met en oeuvre un travelling conforme à l'une quelconque des revendications 1 à 7, comprenant un appareil de prises de vues (7) sur un aéroglisseur (1).

10. Procédé selon la revendication 8, **caractérisé en ce qu'**on met en oeuvre un travelling conforme à la revendication 5, dans lequel l'aéroglisseur (1) comprend une poignée (21) et on déplace ledit aéroglisseur (1) au moyen de ladite poignée (21).
